# EUROPEAN PATENT APPLICATION

(11) **EP 3 470 652 A1**
(43) Date of publication of application: **17.04.2019**
(21) Application number: 18196504.7
(22) Date of filing: 25.09.2018
(51) Int. Cl.: F02C 7/042, F02C 7/045

(54) **GAS TURBINE ENGINE VORTEX SUPPRESSOR**

(30) Priority: 13.10.2017 GB 201716836
(71) Applicant: Rolls-Royce plc, London SW1E 6AT (GB)
(72) Inventor: di Mare, Luca, Derby, Derbyshire DE24 8BJ (GB); Barbarossa, Fernando, Derby, Derbyshire DE24 8BJ (GB); Carnevale, Mauro, Derby, Derbyshire DE24 8BJ (GB)
(74) Representative: Rolls-Royce plc

(57) **Abstract**

An intake (12) for a gas turbine engine (10) has an annular lip structure (23) extending about a central axis (11) and defining an intake opening. The annular lip structure (23) has a leading edge (38) located between a radially inwardly facing portion of the intake and a radially outwardly facing portion of the intake (12). The annular lip structure (23) has upper, lower and opposing side regions on either side of the central axis (11). The annular lip structure (23) comprises a formation (40; 42; 48) on the radially inwardly facing portion arranged to create a non-symmetric flow field over the opposing side regions of the annular lip structure (23). The formation (40; 42; 48) may be actively controlled in response to ground vortex conditions.

## Description

The present disclosure concerns aircraft engines.

It is a known problem that aircraft engines operating close to the ground can cause the device of a vortex externally of the engine and upstream of the engine intake.

The external vortex interacting with the ground is often referred to as a ground vortex. In order for a ground vortex to form, the ratio of the air velocities at the engine intake throat and far away from the intake must be high. In this condition, the convolution of the streamlines of the ingested flow define a stream-tube interacting with the ground. Ground vortices are a problem especially when the engine is operating at high power/thrust while the aircraft is moving at slow speed - as an example, when taxiing - or else is static.

The ground vortex extends generally upwards from the ground and turning into the engine inlet and carries a distortion in total and static pressure, as well as flow direction dependent on its strength.

It is known that the ground can be represented, for the purpose of numerical modelling, as a symmetry plane. The flow field of a single intake and its ground vortex can thus be modelled by adding a mirror image of the intake and linking the two intakes by a U-shaped vortex line.

Establishing a ground vortex of this kind is undesirable because it deteriorates the quality of the flow into the fan. More precisely, the ground vortex is a cause of increased fan forcing and can lead to fan stall. In severe cases it is possible that the flow field distortion can significantly impact the flow through the core engine leading to a possibility of engine surge.

The interaction of the vortex with the ground also means that foreign objects, such as debris, can become entrained in the airflow, drawn up into the inlet and ingested by the engine.

Whilst the problems described above affect engines on the airframe, e.g. engines on wing, the same problems can arise for statically mounted engines, such as engine test beds.

US Patent 6,763,651 discloses an active system for the wide area suppression of ground vortex generated by the engine of an aircraft, comprising an actuator assembly connectable to a fluid source in the engine and a nozzle assembly arranged to eject fluid over a desired region in front of the engine inlet to disrupt the flow structure of a ground vortex.

US Patent 2,915,262 discloses a jet nozzle fed from a bleed outlet of an engine compressor stage via ducting. The jet nozzle is aimed towards the ground from the external surface of the nacelle. US Patent 6,129,309 also concerns the bleeding of air form the engine and directing the bled air in front of the engine intake to disrupt a ground vortex prior to entry into the engine inlet.

US Patent 3,599,429 discloses a similar principle of blowing air through a nozzle to disrupt ground vortex. In this example, an elongate tube extending in front of the engine is used to create an artificial headwind of sufficient velocity underneath the jet engine area in a direction which prevents the necessary conditions for the origin of a ground vortex stagnation point.

The above described prior art examples all aim to modify the flow upstream of the engine intake to disrupt or blow away a ground vortex or prevent ground vortex formation. However, the airflow required to achieve these aims is relatively large and the plumbing to take air from the rear compressor stages adds unwanted complexity to the engine. Moreover the large amount of air ejected through the nozzles can adversely affect flow into the engine, e.g. the stream tube ingest of the intake.

The nozzles used in the prior art also affect fluid dynamics for the engine in normal use (i.e. away from the ground) and negatively disrupt the desired flow field for the engine intake or exterior of the nacelle when not needed.

US Patent 6,910,370 discloses the use of a ramp moveable into position on the ground such that it is in the flow path placed between the inlet and the ground to prevent ground vortex initiation. The ramp can be adjusted for different angles of configuration. However, the use of a separate portable device of this kind is suitable only for a testing environment and is not practical for use at airports or when aircraft are moving, e.g. taxiing.

According to the present disclosure there is provided an intake for a gas turbine engine comprising an annular lip structure extending about a central axis and defining an intake opening, the annular lip structure having a leading edge located between a radially inwardly facing portion of the intake and a radially outwardly facing portion of the intake, the annular lip structure having upper, lower and opposing side regions on either side of the central axis, wherein the annular lip structure comprises a formation on the radially inwardly facing portion arranged to create a non-symmetric flow field over the opposing side regions of the annular lip structure. The formation may act to suppress vortical flow within a working gas flow entering the intake, in use.

The formation may be a gas washed formation. The formation may act on the air/gas flow entering the intake, e.g. the ambient air flow into the engine, in use.

The formation may cause non-symmetric fluid dynamic loading of the opposing side regions of the annular lip structure. The formation may modify the load distribution on the intake lip by causing an offset of fluid dynamic loading between the opposing side regions, e.g. for an asymmetric intake flow profile - such as for a cross wind scenario.

The formation may act to suppress ground vortex formation. The formation may act to suppress ground vortex formation when the intake is located in the vicinity of the ground or another support surface, e.g. located beneath the intake/engine.

The formation may be located on either or both side regions of the lip structure. The formation may disturb or affect the flow over either or both side region.

The formation may disturb the flow into the engine as it passes through the intake opening, e.g. radially within annular lip structure.

The formation may comprise one or more flow opening. Ducting within the interior of the lip structure may terminate/open at the flow opening. The ducting may be used to apply a positive or negative fluid pressure at the opening, i.e. to blow air into the flow through the intake or extract air from the flow through the intake. The ducting may be arranged to be connected to a flow source. The flow source may comprise a compressor of the engine or equipment independent of the engine.

Ducting for flow communication with the one or more flow opening may comprise an anti-icing ducting system.

The flow opening may face towards the central axis, e.g. radially inwardly and/or forwardly/upstream with respect to a plane of the intake opening.

A plurality of flow openings may be provided. A plurality of flow openings may be provided on either or both side region of the lip structure.

A plurality of rows of flow openings may be provided in the lip structure, e.g. on the radially inwardly facing portion thereof. A plurality of rows of flow openings may be provided on either or both side region of the intake/lip structure.

The one or more formation may be provided upstream of a fan of the gas turbine engine. The one or more formation may be provided between the leading edge of the lip structure and the fan in the direction of intake flow into the fan.

The one or more formation may comprise a wall portion of the lip structure. The one or more formation may comprise an actuatable wall portion of the lip structure. The wall portion may have an at-rest condition in which the section profile through the lip structure is symmetrical about the leading edge and a deformed/actuated condition, in which the lip structure is asymmetrical about the leading edge, e.g. skewed radially inwardly towards the central axis or away from the central axis.

The formation may comprise a part of an associated device. The device may comprise an actuator for the formation.

The formation may comprise one or more acoustic emitter.

A sensor may be provided for sensing a ground vortex, sensing one or more condition indicative of, or resulting from, a ground vortex and/or sensing one or more condition indicting a likelihood of ground vortex formation.

According to a second aspect of the disclosure, there is provided a gas turbine engine comprising the intake structure of the first aspect.

The gas turbine engine may comprise a de-icing flow ducting system. The formation may comprise one or more flow opening and the de-icing flow ducting system may be connected to one or more flow opening.

According to a third aspect of the disclosure there is provided a ground vortex mitigation system for a gas turbine engine comprising a controller arranged to receive sensor readings indicative of ground vortex conditions for a gas turbine engine and an intake according to the first aspect, wherein the formation comprises an actively controllable device and the controller is arranged to output a control signal for operation of the device based upon the received sensor readings.

The sensor may comprise one or more wind speed and/or direction sensor. The sensor may comprise an engine operation sensor arranged to sense a running condition of the engine.

The device may comprise one or more flow opening and the controller may control supply of flow to/from the flow opening.

According to a fourth aspect of the disclosure, there is provided a data carrier comprising machine readable instructions for a gas turbine engine controller to operate in accordance with the controller of the third aspect.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a schematic three-dimensional view of an intake for a gas turbine engine and its associated flow conditions;
**Figure 3** is a front view of a gas turbine intake geometry modified to alter fluid dynamic loading;
**Figure 4** is a plot of ground vortex intensity against the inflow velocity ratio for two different gas turbine engine intake profiles;
**Figure 5** shows respective left and right hand three-dimensional view of a gas turbine engine intake according to an example of the disclosure;
**Figure 6** shows a three-dimensional view of a gas turbine engine intake having an array of flow openings
**Figure 7** shows a three-dimensional view of a gas turbine engine intake having a different formation within its lip structure according to a further example of the disclosure;
**Figure 8** shows a section view through the intake of Figure 7 in a usage condition; and,
**Figure 9** shows a three-dimensional view of a gas turbine engine intake having another type of formation within its lip structure.

Unlike the above-mentioned prior art systems that require use of an accessory external of the engine to achieve this aim, the present disclosure indicates that this can be achieved using a different, and more pragmatic, mechanism. The mechanism identified by the inventors involves modifying the fluid dynamic load of the intake flow on the engine intake lip.

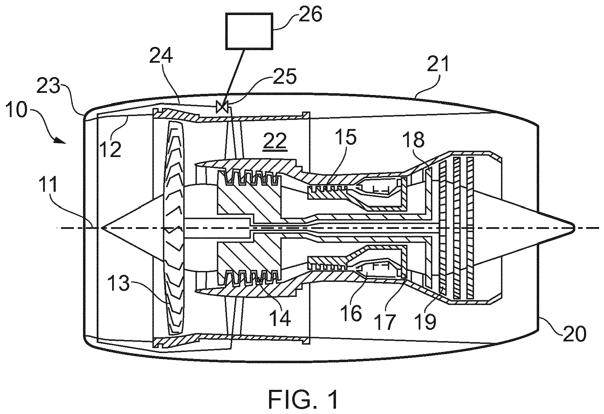

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that a working gas such as air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high-pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The intake 12 has a frontal lip 23 defining a leading/frontal edge of the intake where the wall structure of the intake turns from a radially inwardly facing surface to a radially outwardly facing surface. The lip 23 is curved/rounded in section so as to provide a smooth transition between the inwardly and outwardly facing portions of the intake 12 (e.g. the radially inner and outer surfaces). The intake structure thus extends around the frontal edge of the nacelle 21 at the lip 23, which faces the incoming airflow to the engine 10.

The lip 23 and intake 12 is annular in form, forming a complete annulus around the axis 11.

In use a stagnation point will be defined at the front facing region of the lip 23 such that flow passing radially inside the stagnation point will flow into the nacelle 21 and flow passing radially outside of the stagnation point will flow around the nacelle 21 exterior.

Also shown in Figure 1 is an air ducting system for supplying a working gas such as air to the interior of the intake 12, i.e. within the foremost portion of the nacelle 21 towards front facing portion of the lip 23. The air ducting system comprises ducting 24 leading from a compressor 14, 15 to the interior of the nacelle immediately behind the lip 23. A valve 25 controls the flow to the intake 12, e.g. taking the form of a controllable/adjustable valve/regulator under the control of controller 26.

Further details of a suitable anti-icing system for use in conjunction with the present disclosure can be found in the prior art, such as within published patents and patent applications US7900872 B2, US20140263837 A1 and US6267328 B1.

The controller 26 may be a conventional electronic engine controller, e.g. a full authority digital engine controller (FADEC), or else another controller implemented for the purpose of the present disclosure. The controller comprises machine readable instructions, e.g. as one or more module of executable code, for controlling bleeding of air from the compressor 14 or 15 to the intake 12.

The ducting 24 may comprise ducting of an anti-icing system for the engine, e.g. such that the anti-icing system may be used to supply a working gas such as air to the intake 12 to prevent ice accretion during normal use but may also be used to supply air for the purpose of the present disclosure, i.e. to prevent ground vortices, as an additional or alternative use. The use of anti-icing ducting and control system may be beneficial in that it reuses existing hardware and thereby avoids significant additional weight penalty or engine complexity for the purpose of implementing a ground vortex mitigation system.

Air bled from a compressor for the purpose of the present disclosure (and the anti-icing system) does not require as highly pressurised source as in the prior art systems discussed above and can be bled from a lower pressure source. This can reduce the engine efficiency loss caused by operation of a ground vortex mitigation system. The ducting 24 may be in fluid communication with a specific compressor stage of the intermediate 14 or high 15 pressure compressor.

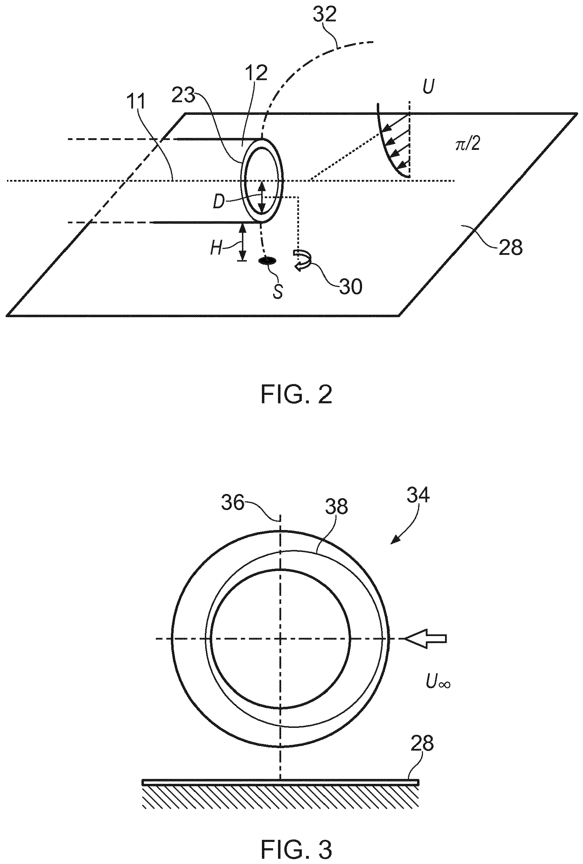

Turning now to Figure 2, there is shown a schematic of an intake 12 having a diameter, D, and being positioned at a fixed clearance, H, off the ground 28 or other similar support surface. A vortex 30 can occur on the ground 28 and recirculating about a generally upright axis, so as to be able to be ingested by the engine intake 12, when two conditions are satisfied as follows:
- the ingested flow interacts with the ground defining a stagnation point, S
- the incoming flow U over the ground at the same time induces a drag and lift force on the intake lip 12.

It has been determined that the intensity of the ground vortex 30 is related to the fluid dynamic load on the lip 23 caused by the ambient flow/wind (e.g. cross wind) conditions.

The flow field in this condition can be described with simple approaches such as a singularity method, where the ground vortex has been represented by a vortex line 32 starting from the stagnation point S. It has also been demonstrated using both computational fluid dynamics modelling techniques and experimental data that the ground vortex 30 is related to the load induced on the lip by the incoming wind.

Therefore, it has been found that altering the intake geometry so as to modify the load induced on the lip can reduce the likelihood a ground vortex 30 forming. In Figure 3 there is shown a front view of a hypothetical intake geometry 34 that has been optimized to prevent ground vortex formation for a fixed wind direction and speed, i.e. fixed flow velocity U_{∞}. In this example, the ambient flow regime is a horizontal cross wind. The lip geometry 34 is non-symmetrical about the vertical axis 36 so as to modify the relative load (e.g. lift and drag components) acting on the opposing left-hand and right-hand lateral sides of the intake 34. In particular the leading edge 38 of the lip/intake geometry has been laterally skewed such that it is offset from a circular intake or other intake form that would be generally symmetrical about central axis 36.

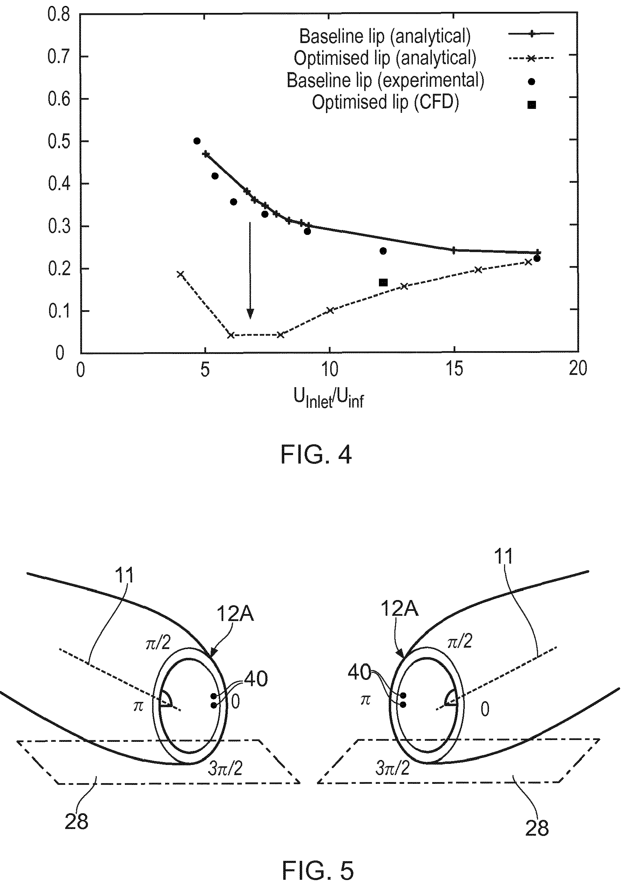

Figure 4 shows a comparison of the ground vortex 30 strength/intensity between a baseline intake and an optimized (non-symmetric) intake 34 for the prevailing cross-wind conditions. The ground vortex recirculation is plotted against the ratio of engine intake flow speed to the oncoming free stream air/wind flow speed a distance from the intake.

It has been determined that minimizing the intake fluid dynamic loading by the cross wind reduces/minimizes the circulation of the ground/ingested vortex 30. A non-symmetric intake as show in Figure 3 can be defined by optimization procedure for given oncoming wind condition. Furthermore, a geometry optimization algorithm has been written for modifying the profile of the lip of an intake for different fixed incoming wind conditions.

Whilst the altering of the intake geometry provides one mechanism for altering fluid dynamic loading of the intake to reduce ground vortex initiation, an alternative method determined by the inventors is to alter the flow field in the immediate vicinity of the intake, i.e. to adjust the interaction of the engine inflow with the intake geometry, in addition to or instead of adjusting the geometry itself. Unlike the prior art discussed above, the injection of air into the flow for this purpose is in the flow field adjacent the lip/intake wall, e.g. in the boundary layer of the lip, rather than towards the ground or beneath the engine nacelle.

Active control devices are proposed to alter the fluid dynamic loading experienced by the intake/lip in accordance with various examples of the disclosure as will be described below.

Turning to Figure 5, there is shown an example of an intake 12A having one or more flow opening 40 on an inside wall of the intake, e.g. downstream of the leading edge of the intake lip. In this example flow openings 40 are provided in opposing lateral side regions of the intake. For example, if the circumference of the intake is divided into four equal segments defined as left, right, upper and lower segments with respect to a vertical axis, then the flow openings are provided in the opposing left and right segments. A plurality of flow openings 40 are provided on each lateral side.

In Figure 5, the location of the flow openings 40 is indicated in radians, with 0 and π radians lying on a horizontal axis. The right-hand openings are provided at 0 rad and the left-hand openings are provided at π rad. In this example, two openings 40 are provided on each side, the openings on each lateral side being centred about a horizontal axis.

The flow openings according to aspects of the disclosure may comprise nozzles, e.g. to provided directed air jets for selectively disrupting incoming flow onto the lateral regions of the intake lip. The nozzle structure may be recessed in the intake wall or contained within the interior cavity within the intake structure so not to disrupt intake flow into the engine when ground vortex mitigation is not required.

The flow opening(s) 40 may be in fluid communication with the ducting 24 described above in relation to an engine anti-icing system as shown in Figure 1.

Depending on the flow direction of the wind outside of the engine, the controller 26 may operate one or more flow control valve 25 to selectively supply flow to flow openings 40 on just one side of the intake to adjust flow loading in response to the oncoming airflow. Thus, the controller 26 can react to current/changing wind by altering the flow loading on one side region of the intake lip relative to the other.

It will be appreciated that at least two flow control valves 25 will typically be provided under the control of the controller 26, or else a flow diverting unit to selectively switch between the left and right-hand flow openings 40.

As well as being able to provide a positive fluid pressure to the flow openings to expel air through the openings, it is possible that the controller could additionally or alternatively control the selective application of a negative pressure at the openings 40. Thus, intake air could be removed through the flow openings 40. In one example, the controller can concurrently apply positive and negative pressure sources to openings 40 on opposing lateral sides of the intake. Various control options for selectively ejecting and/or injecting air are thus available.

The flow rate through the openings may be variably controlled. The volumetric flow rate needed for the purpose of the present disclosure is relatively small compared to the air jets required by the prior art and it is not necessary to feed the ground vortex mitigation system from the rear, higher-pressure compressor stages of the engine.

In further examples, different arrangements/arrays of the above-described flow openings could be provided, e.g. comprising more than two openings on each of the lateral left and right sides of the intake.

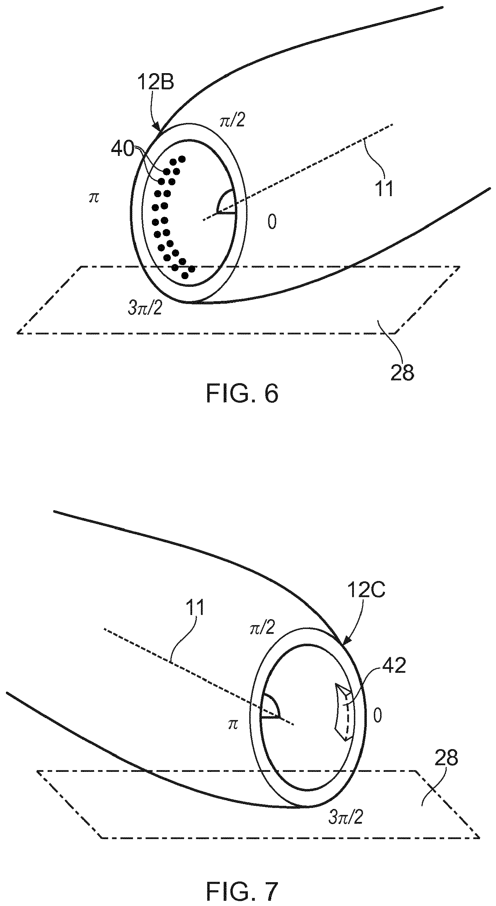

In Figure 6 there is shown an intake 12B with a plurality of rows of intake openings 40 on each lateral side of the engine. Flow through the openings 40 may be individually or collectively controllable in the manner described above. Different rows of flow openings on either side of the intake 12B may be individually controllable by the controller 26, e.g. using a plurality of flow control valves 25 or diverters. Each row may be axially spaced along the principal axis 11 relative to the adjacent row. Additionally or alternatively, each row may be considered to be axially-extending and/or spaced from an adjacent row in an circumferential direction with respect.

Thus, an array of openings 40 is provided such that different portions of the array can be provided with a positive/negative fluid pressure supply to provide greater control options for reacting to the prevailing wind conditions. The array of openings allows control of the load due to the pressure distribution, according to circumferential and/or axial distribution of the array.

In other examples, a single row of openings 40 could be provided on each lateral side of the intake.

In examples of the disclosure, a perforated or porous wall region may be used instead of discrete flow openings.

Where an array of openings or performed/porous wall section is used, the ducting system may comprise a plenum behind the array/perforated wall section to provide common control of a plurality of openings. A baffle or discontinuity in the plenum may separate the left and right lateral side portions.

In some examples of the disclosure, it is possible that openings could be provided at spaced locations around the entire circumference of the engine intake. One or more complete row of openings could be provided in this manner. Whilst the lateral openings are considered most important for the purpose of the present disclosure, openings in the upper and lower regions of the intake may provide additional/alternative flow-loading control options for the intake lip.

Turning now to Figure 7, there is shown an example of an intake 12C having an adjustable wall section 42 for altering the fluid dynamic loading on the intake lip. The wall section 42 is located in a manner similar to that described above with respect to the flow openings 40 of Figures 5 and 6. Opposing lateral adjustable wall sections may be provided on opposing lateral sides of the intake 12C.

The adjustable wall section 42 has an at-rest condition, where the wall section 42 is flush with the adjacent intake wall profile, and an actuated condition in which the wall section projects radially inwardly or outwardly of the intake wall profile. That is to say the wall section 42 may be actuated so as to protrude radially inside the of the intake wall profile and thereby provide a flow obstruction/restriction at the intake. Additionally or alternatively, the wall section 42 may be actuated so as to depend into the structure of the intake (i.e. radially outwardly), e.g. thereby providing a flow recess in the intake 12C behind the frontal edge of the lip.

In such examples, the actuation mechanism is electrically powered such that the controller 26 can control electrical actuation of the wall section 42, e.g. rather than the flow control system described above. In such examples, the ducting 24 of Figure 1 may be substituted for an electrical connection. Various actuator options are available, e.g. including a shape memory alloy actuator, a solenoid or similar.

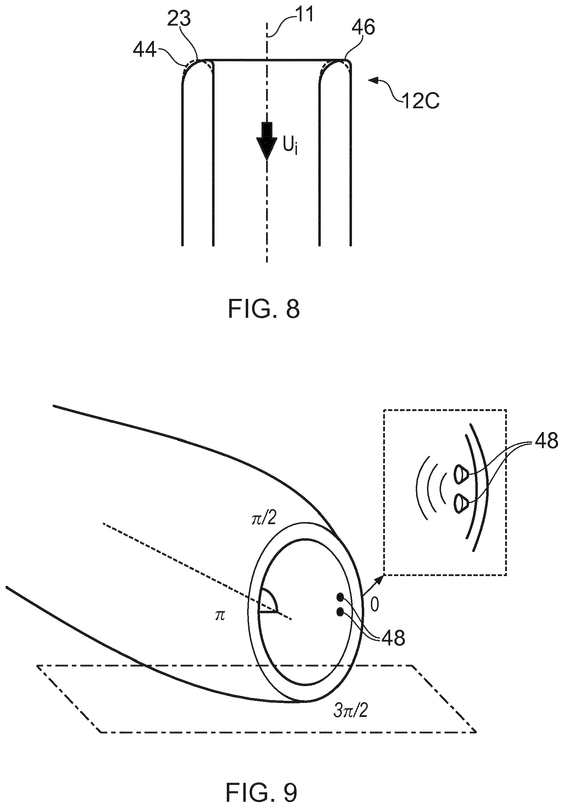

The wall section may have a fixed/distal end, e.g. spaced furthest form the front edge of the intake lip and a proximal/actuatable end. The actuation of the front/proximal end may be used to present a bluff obstruction to the incoming flow. In other examples, the wall section 42 may be provided in the front facing portion of the lip and may alter the sectional profile of the lip surface. An example is shown in Figure 8 in which the at-rest lip profile 44 is shown in phantom and a deformed lip profile 46 is shown in solid line. The lip profile is adjusted such that it is not symmetrical about the leading edge 23 when viewed in section. Actuators on opposing lateral sides of the intake 12C are provided and can be operated separately or in unison so that the intake profile on opposing lateral sides is also not symmetrical about the principal axis 11 or a vertical plane containing the principal axis 11.

The leading edge 23 may be shifted laterally to the left or right in the vicinity of the adjustable wall section 42.

In normal use, away from the ground 28, the wall section 42 will be returned to its at-rest configuration so as to minimise any aerodynamic loss when ground vortices are not an issue.

Turning to Figure 9, another example intake 12D is shown in which acoustic actuators 48 are used instead of, or in addition to, the active control means described in relation to Figures 5-8. Any number or array of acoustic emitters 48 may be provided in any position, arrangement or array of the kind described above in relation to the flow openings 50 of Figures 5 and 6.

The acoustic emitters 48 can be used to influence the flow field and thus the fluid dynamic loading of the intake lip under the control of controller 26 in a manner described herein.

In any examples of the invention, suitable sensors can be used for determining any, or any combination of: wind speed and/or direction; intake flow velocity; intake fluid pressure profile; and/or intake loading profile. The conditions for ground vortex generation may be known a-priori, for example based on the engine mass flow rate (which may be known by the engine control system based on the position of the throttle) and the wind speed and direction (which may be known from measurements on the aircraft and/or from meteorological data supplied by the air traffic control authorities or other service). Such inputs may be used to determine how and when to actuate the ground vortex mitigation systems disclosed herein. Ground vortex mitigation means may be activated when the initiation of a ground vortex is likely even if the vortex has not formed yet.

According to various embodiments of the disclosure, pressure sensors may be provided for the inlet lip. A set of pressure taps may be located at the lip of the inlet. Suitable pressure sensors would evaluate the Cp distribution on the lip. A plurality or array of pressure sensors may thus be provided, e.g. at spaced locations around the inlet opening.

Sensor readings may be fed to the controller as inputs for determining operation of the relevant control means for altering the intake fluid loading profile to prevent ground vortex generation or reduce ground vortex intensity.

The present disclosure may provide one or more benefit over the prior art, such as:
- embodiments which only use jets requires no moving parts such as retracting plates or nozzles;
- a simple porous wall or flow opening structure is sufficient to realise the function of the fluid dynamic loading control;
- a cost-effective solution can be enabled;
- there is minimal or no disruption to the aerodynamic form of the intake when ground vortex mitigation is not needed;
- the amount of air/energy required is very small
- the device, even when in operation has little impact on the ingested flow into the engine and does not significantly alter the flow profile at the fan face.
- the flow ducting system can use plumbing initially intended for de-icing
- if the system employs only acoustic actuators or actuatable wall sections, a dedicated plumbing system is not necessary.

In examples of the disclosure described above, active device control may be used such that the formation is used to affect aerodynamic loading only selectively, such that when ground vortex forming conditions are not identified, the optimal/aerodynamic form of the intake is not affected.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. An intake (12) for a gas turbine engine (10) comprising:
an annular lip structure (23) extending about a central axis (11) and defining an intake opening,
the annular lip structure (23) having a leading edge (38) located between a radially inwardly facing portion of the intake and a radially outwardly facing portion of the intake (12), the annular lip structure (23) having upper, lower and opposing side regions on either side of the central axis (11),
wherein the annular lip structure (23) comprises a formation (40; 42; 48) on the radially inwardly facing portion arranged to create, in use, a non-symmetric flow field over the opposing side regions of the annular lip structure (23) to suppress vortical flow within a working gas flow entering the intake.

2. An intake (12) according to claim 1, wherein the formation (40; 42; 48) is a gas washed formation of the intake (12) and acts to disturb the gas flow as it enters the intake over the lip structure (23) to be ingested by the engine (10).

3. An intake (12) according to claim 1 or 2, wherein the formation (40; 42; 48) has an at-rest condition and an in-use condition is actively controllable by a controller (26) between said conditions.

4. An intake (12) according to any preceding claim wherein the formation (40; 42; 48) is provided on at least one side region or side wall section of the annular lip structure (23).

5. An intake (12) according to any preceding claim comprising a plurality of said formations (40; 42; 48), at least one of said formations being located on each opposing lateral side region of the lip structure (23).

6. An intake (12) according to any preceding claim wherein the formation (40; 42; 48) comprises one or more flow opening (40).

7. An intake (12) according to claim 6, comprising ducting (24) within the interior of the lip structure (12) in communication with the flow opening (40), the ducting (24) comprising a flow control device (25) for selective control of flow to or from the flow opening (40) via the ducting (24).

8. An intake (12) according to any preceding claim, comprising a plurality of said formations (40; 42; 48) on either side region of the lip structure (12).

9. An intake (12) according to any preceding claim, comprising an array of said formations (40; 42; 48) having one or more row of formations on either side region of the lip structure (12).

10. An intake (12) according to any preceding claim, wherein the one or more formation (40; 42; 48) is provided between the leading edge (38) of the lip structure (12) and a fan (13) of the gas turbine engine (10) in the direction of intake flow into the fan (13).

11. An intake (12) according to any preceding claim, wherein the one or more formation (40; 42; 48) comprises an actuatable wall portion (42) of the lip structure (12).

12. An intake (12) according to any preceding claim, wherein the formation (40; 42; 48) comprises one or more acoustic emitter (48).

13. An intake (12) according to any preceding claim, comprising a controller (26) arranged to receive sensor readings indicative of ground vortex formation conditions for the gas turbine engine (10), wherein the formation is an actively controllable formation (40; 42; 48) and the controller (26) is arranged to output a control signal for operation of the formation (40; 42; 48) based upon the received sensor readings.

14. A gas turbine engine (10) comprising the intake structure (12) of any preceding claim.

15. A data carrier comprising machine readable instructions for a gas turbine engine controller (26) to receive sensor readings indicative of ground vortex formation conditions for the gas turbine engine (10), and to output a control signal for operation of an actively controllable formation (40; 42; 48) located on an annular lip structure (23) of an intake (12) of the gas turbine engine (10) based upon the received sensor readings so as to alter the fluid dynamic loading of an intake airflow on the lip structure (23).
